# EUROPEAN PATENT APPLICATION

(11) **EP 4 328 014 A1**
(43) Date of publication of application: **28.02.2024**
(21) Application number: 23190827.8
(22) Date of filing: 10.08.2023
(51) Int. Cl.: B31D 3/02, B31D 3/04, B31D 1/00, B31F 5/04, B65D 65/40, B65D 81/02

(54) **METHOD OF MAKING AN ISOTHERMAL WRAPPING AND RELATED ISOTHERMAL WRAPPING**

(30) Priority: 25.08.2022 IT 202200017622
(71) Applicant: Imball - Center - S.r.l., 55100 Lucca (IT)
(72) Inventor: FATI, Mirco, Lucca (IT)
(74) Representative: Firmati, Leonardo

(57) **Abstract**

Described is a method for making a wrapping (1) comprising the steps of providing a first (2) paper layer; at least partly overlapping a second (3) isothermal paper layer over said first (2) layer; applying on said second (3) layer a first (FT) and a second (FT') traction force acting in opposite verses of a same direction; heat-sealing said second (3) and first (2) layers defining said wrapping (1).

## Description

This invention relates to a method for making an isothermal wrapping.

The invention also relates to an isothermal wrapping made with the above-mentioned method.

This invention is applicable, for example, in the sector of food, pharmaceuticals or in any case products to be transported from one place to another and for which it is necessary to maintain a predetermined temperature inside and an adequate level of protection against external impacts.

The term "for food products" in the invention means a wrapping made of materials which, even if placed in direct contact with food, do not release any contaminating substance.

In particular, the invention relates to a method for making a wrapping and relative isothermal wrapping, of the type used to thermally isolate a food product, a pharmaceutical product or other products intended, for example, to be transported.

In fact, currently, for example, the vast majority of food products, before being consumed, are transported from one place to another.

One need only consider how many foods are subjected every day, for example, to the supermarket-home route or to the routes performed to supply the supermarkets themselves.

Even in the case of food products or cooked foods, it is increasingly common to serve them to the consumer in a different place from the one where they were cooked, such as, for example, take-out food or food delivered to the consumer.

The transport of such food products or food requires great care to avoid exposing them to any heat sources that could compromise their quality and above all their level of safety for the consumer.

In general, food, especially fresh food, is best preserved cold, whilst they alter faster when exposed to heat sources.

In effect, many bacterial species, also pathogens, are mesophilic, that is to say, they grow well at temperatures of between 25°C and 40°C and in the presence of water.

The purchase of food contaminated with pathogenic micro-organisms can occur.

Whilst the presence of a limited quantity of these pathogenic micro-organisms is not sufficient to cause serious harm to the consumer, it is also true that the exposure of these foods to heat sources leads to a production of pathogenic micro-organisms which can cause a toxic infection.

In other cases, an inadequate protection from heat sources, even though it does not lead to infectious risk, may in any case result in the qualitative deterioration of a food, a pharmaceutical product or the like.

For example, dry bread does not pose a health risk but is in any case far less satisfactory than it would be if fresh.

It is therefore widely recommended to take the necessary precautions when transporting food, pharmaceutical products or the like.

In this regard, many types of isothermal containers and relative production methods are currently known.

The containers produced using these prior art methods are designed to guarantee optimum storage of the products contained, as well as minimum heat dispersion.

There are currently prior art methods for making containers comprising an outer layer made of plastic material (which may be monofilm or coupled), an insulating layer made of polyethylene and an inner layer made of polyethylene.

Whilst it is true that containers made using these prior art methods are a good solution to the above-mentioned problems, it is also true that these prior art methods have major drawbacks.

A first drawback is due to the fact that these prior art methods allow containers to be made which are highly polluting.

A further drawback is due to the fact that containers made using these prior art methods are often difficult to recycle, since they are made of multi-materials.

The aim of the invention is therefore to provide a method for making a wrapping and relative isothermal wrapping which is able to overcome the above-mentioned drawbacks of the prior art.

Another aim of the invention is to provide a method for making a wrapping and the relative isothermal wrapping which is made of 100% paper.

A further aim of the invention is to provide a method for making a wrapping and the relative isothermal wrapping which is environmentally-friendly and entirely recyclable.

Another aim of the invention is to provide a method for making a wrapping and the relative isothermal wrapping which is simple and inexpensive to make.

According to the invention, these aims and others are achieved by a method for making a wrapping and the related isothermal wrapping comprising the technical features described in the accompanying claims.

The technical features of the invention, according to the above-mentioned aims, are clearly described in the appended claims and its advantages are apparent from the detailed description which follows, with reference to the accompanying drawings which illustrate non-limiting example embodiments of it, and in which:
- Figure 1 shows a schematic perspective view from above partly disarranged of an isothermal wrapping made using a method for making a wrapping according to the invention,
- Figure 2 shows a schematic top view of a first detail of the wrapping of Figure 1,
- Figure 3 shows a schematic top view of a second detail of the wrapping of Figure 1,
- Figure 4a shows a perspective view from above of a third detail of the wrapping of Figure 1, according to a rest configuration and,
- Figure 4b shows a top perspective view of the detail of Figure 4a, according to a traction configuration.

The method for making an isothermal wrapping according to the invention, referred to below for simplicity also merely as the method, comprises in its basic embodiment the following steps:
- placing a first 2 paper layer on a work surface,
- overlapping at least partially a second 3 isothermal paper layer on the first 2 paper layer, wherein the second 3 layer has a plurality 31 of incisions.
- applying on the second 3 layer a first FT and a second FT' traction force acting in opposite verses of a same direction so as to widen the above-mentioned incisions of the plurality 31 in order to obtain a honeycomb shape,
- heat-sealing the second and first layers defining a wrapping 1.

Advantageously, the step of applying on the second 3 layer a first FT and a second FT' traction force allows the second 3 layer to be extended and the plurality of incisions 31 to be enlarged, generating a plurality 31' of empty portions.

Advantageously, the first 2 layer is of the paper type designed to be in contact with food.

Advantageously, the method according to the invention further comprises a step of applying an adhesive S at least on a portion P of the first 2 paper layer.

The first 2 paper layer has a first face 2' designed advantageously to enter into contact with a food product A, and a second face 2" prepared for the application of the adhesive S.

Advantageously, therefore, the step of applying the adhesive S is performed on at least a portion P of the second face 2" of the first 2 paper layer. Advantageously, moreover, the portion P of the second face 2" is a perimeter portion P of the second face 2' ' .

Advantageously, the step of applying the adhesive S is performed by spreading.

According to further embodiments, the step of applying the adhesive S is performed by brushing or spraying.

Advantageously, the method according to the invention comprises a step of folding a first portion of the wrapping 1 onto a second portion of the wrapping 1, in such a way that the first 2 layer defines the innermost layer of the wrapping 1.

Advantageously, the folding step precedes the heat-sealing step.

Advantageously, the heat-sealing step comprises the step of heat-sealing the edges of the wrapping 1 folded after the folding step.

Advantageously, the method according to the invention comprises a final step of cooling the heat-sealed wrapping 1 in such a way as to stabilise the coupling of the layers.

Advantageously, the heat-sealing step is performed at a temperature of between 150°C and 250°C.

Advantageously, the heat-sealing step is a pressing heat-sealing step.

In effect, as well as a heating action, a pressure is also simultaneously applied on the wrapping 1. Advantageously, the heat-sealing step occurs by means of a plurality of sealing bars.

Alternatively, the heat-sealing step occurs by means of a rotary heating element.

Advantageously, the cooling step occurs by means of a plurality of cooling bars.

Alternatively, the cooling step occurs by means of a rotary cooling element.

Advantageously, the method according to the invention, after the step of at least partly overlapping the second 3 layer on the first 2 layer, comprises the steps of:
- preparing a third 4 paper layer,
- overlapping at least partly the third 4 paper layer on the second 3 layer.

According to the embodiment comprising also the third 4 layer, the wrapping 1 is defined by overlapping the first 2 layer, the second 3 layer and the third 4 layer. Advantageously, the method according to the invention further comprises a step of applying the adhesive S at least on a portion P' of the third 4 layer. Advantageously, the at least one portion P' is a perimeter portion of a contact face 4' of the third 4 layer with the second 3 layer.

Advantageously, the step of overlapping the third 4 layer on the second 3 layer positions the at least one portion P' of the third 4 layer in contact with the portion P of the first 2 layer and in contact with the second 3 layer. Advantageously, moreover, the heat-sealing step comprises the step of heat-sealing the third 4 layer with at least the second 3 layer.

Advantageously, during the step of heat-sealing, a plurality of areas of the at least one portion P comprising adhesive S passes through the plurality 31' of empty portions of the second layer for gluing on the third 4 layer.

Advantageously, the method according to the invention further comprises a step of folding a foldable portion 41 of the third 4 layer in such a way that the third 4 layer adheres to the first 2 layer using a two-sided adhesive element made on the foldable portion 41.

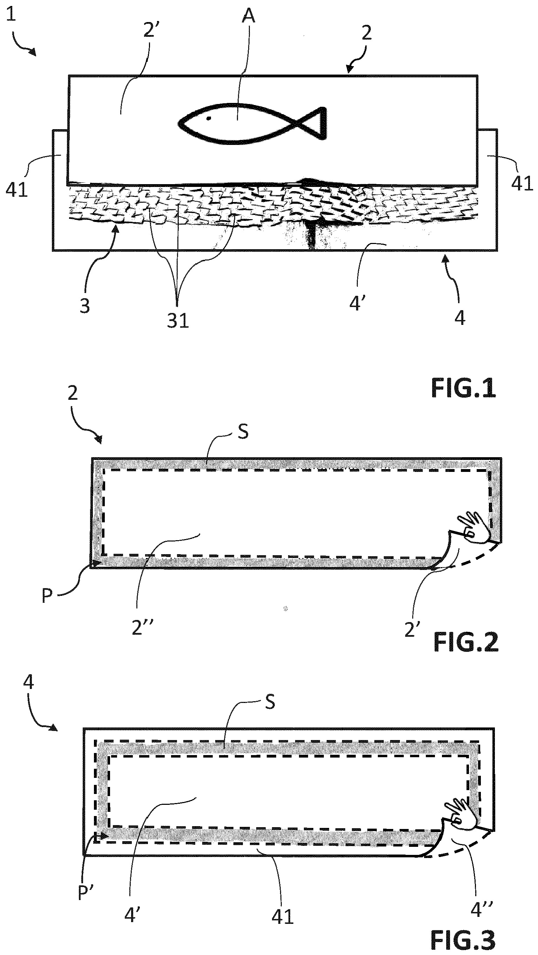

With reference to the accompanying drawings, another object of the invention is also an isothermal wrapping 1, denoted in this text also simply as the wrapping 1. With reference to Figures 1 and 2, the wrapping 1 according to the invention comprises a first 2 paper layer having a first face 2' designed to advantageously come into contact with a food product A, and a second face 2" comprising an adhesive S positioned on at least one portion P of the second face 2".

The first face 2' is such as to guarantee the necessary degree of safety for contact with food.

In particular, the first face 2' is configured to prevent the transfer to the food product A of components which could constitute a danger for the health of a consumer or deteriorate the organoleptic characteristics of the food product A.

Advantageously, the adhesive S is applied by spreading. Advantageously, moreover, the adhesive S, is for example of the LDPE type.

With reference to Figure 1, the wrapping 1 according to the invention further comprises a second 3 isothermal layer having a plurality of incisions 31. Advantageously, the second 3 isothermal layer has a high thermal insulation capacity.

Moreover, the second 3 isothermal layer has a honeycomb shape.

Advantageously, therefore, the plurality 31 of incisions are obtained by forming a plurality of hexagons (or any other geometrical shapes such as, for example, squares or rhombi) on the second 3 isothermal layer.

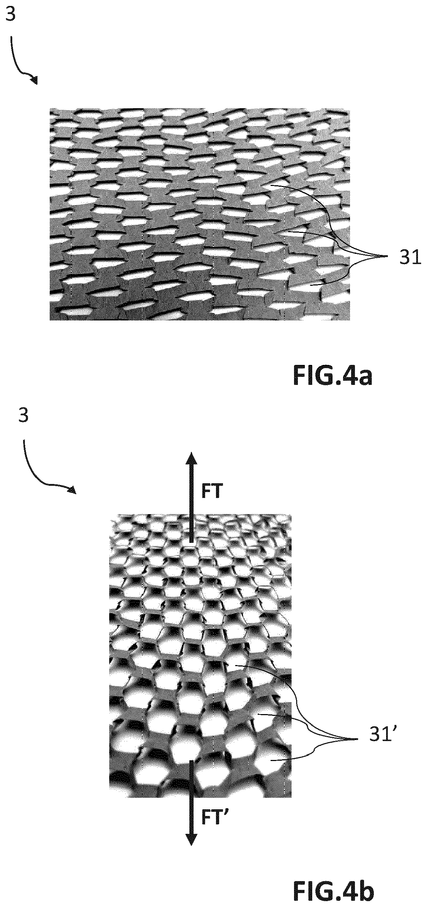

In detail, the shape of the second 3 layer is such that when this is laid out in the rest state, that is to say, without any traction force applied on it, it is like a flat sheet with the plurality 31 of incisions on its entire thickness, as shown in Figure 4a.

When, on the other hand, the second 3 layer is subjected to a first FT and a second FT' traction force acting in opposite verses of a same direction, the cut portions of the plurality 31 widen to form a respective plurality 31' of empty portions in the second 3 layer. Advantageously, the empty portions of the plurality 31' have greater extension than the plurality 31 of incisions.

When the traction forces FT and FT' act on the second 3 layer, that is to say, when the plurality 31' of empty portions is created, the total thickness of the second 3 layer increases, as shown in Figure 4b.

In use, inside a wrapping 1 according to the invention, the second 3 layer is first pulled in two opposite verses of a same direction (by the above-mentioned traction forces FT and FT') in such a way as to adopt the configuration shown in Figure 4b (three-dimensional) and it is then glued at least to the first 2 layer in such a way as to stably maintain the configuration.

The term "isothermal layer" means a layer such as to allow a constant temperature to be maintained inside the wrapping 1 in such a way as to preserve or transport perishable materials.

The second 3 isothermal layer is designed to be stably coupled to the above-mentioned portion of the second face 2" of the first 2 layer.

This coupling is performed by means of the adhesive S. Advantageously, according to an embodiment illustrated in Figure 2 the adhesive S is applied on a perimeter portion P of the second face 2".

According to an embodiment not illustrated, the adhesive S is applied on the entire area of the second face 2". The first 2 and second 3 layers are made of paper. Advantageously, the second 3 layer has a thickness greater than that of the first 2 layer.

Advantageously, the wrapping 1 also comprises a third 4 layer.

The third 4 layer is positioned stably in contact with the second 3 layer by means of a relative face 4', in such a way that the second 3 layer is interposed between the first 2 and the third 4 layers.

Advantageously, the third 4 layer allows the protection of the food product A (or of any product) in the wrapping 1 to be further optimised.

Advantageously, moreover, the third 4 layer makes it possible to optimise the fixing and protection of the second 3 isothermal layer inside the wrapping 1. Advantageously, the third 4 layer is made of paper. Advantageously, moreover, the adhesive S present on the above-mentioned at least one portion of the second 2" face of the first 2 layer is designed to pass through the plurality 31 of incisions, and in particular the plurality 31' of empty portions of the second 3 layer, when the second 3 layer is subject to the above-mentioned traction forces, in such a way as to connect by gluing the first 2 layer with the third 4 layer.

In particular, a plurality of spread portions of adhesive S of the second face 2" are designed to pass through the plurality 31' of empty portions for securely adhering to the third 4 layer in a respective plurality of contact points.

The plurality 31' of empty portions therefore also allows the degree of compactness and adhesion of the first 2 second 3 and third 4 layers to be optimised, allowing at the same time a high level of thermal insulation inside the wrapping 1 to be maintained.

Advantageously, with reference to Figure 3, the contact face 4' of the third 4 layer comprises at least one perimeter portion P' having the adhesive S in such a way as to glue the second 3 layer to the third 4 layer. This makes it possible to further optimise the degree of adhesion of the layers 2, 3 and 4.

According to a further embodiment not illustrated, the wrapping 1 comprises two second isothermal layers 3 each having a plurality of incisions 31 and having a honeycomb shape.

Advantageously, the two second isothermal layers are positioned perpendicular to each other.

This makes it possible to further optimise the isothermal degree of the container.

Advantageously, moreover, the third 4 layer has an area greater than the area of the first 2 layer and the second 3 layer.

In particular, the third 4 layer has a portion protruding relative to the first 2 layer and the second 3 layer in such a way as to allow a closing fold to be made on the first 2 layer.

Advantageously, moreover, the third 4 layer comprises a foldable portion 41 comprising a two-sided adhesive element.

The foldable portion 41 defines the portion emerging relative to the first 2 layer and the second 3 layer. Advantageously, the two-sided adhesive element comprises a peelable piece of paper.

Advantageously, moreover, the third 4 layer has a printed outer face 4".

Advantageously, the outer face 4" has decorations of any type.

The method for making a wrapping 1 and the related isothermal wrapping 1 according to the invention overcome the above-mentioned drawbacks and achieve important advantages.

The first important advantage achieved by the method for making a wrapping 1 and the relative isothermal wrapping 1 according to the invention is due to the fact that it provides a product which is at the same time "green", easily recyclable and effective for protecting the product.

In effect, the wrapping made using this method, being made entirely of paper, is 100% recyclable and without any difficulty for dividing the material, as is the case, on the other hand, with the prior art isothermal containers.

A further advantage is that the method for making a wrapping 1 and the relative isothermal wrapping 1 according to the invention makes it possible to provide a product which is simple and inexpensive to make.

A further advantage is that of providing a wrapping 1 having high thermal insulation properties, in particular according to the embodiment comprising three layers, by means of the gap effect generated by the second layer interposed between the first and the third layers.

In effect, once the incisions have been widened, the honeycomb made in the second 3 layer constitutes a volume of air with high thermal insulation.

The thermal insulation is clearly fundamental if the wrapping is used as a wrapping for transporting perishable food and/or pharmaceuticals.

## Claims

1. A method for making an isothermal wrapping (1) comprising the following steps:
- placing a first (2) paper layer on a work surface,
- overlapping at least partially a second (3) isothermal paper layer on said first (2) paper layer, said second (3) layer having a plurality (31) of incisions,
- applying to said second (3) layer a first (FT) and a second (FT') traction force acting in opposite verses of the same direction so as to widen said plurality of incisions (31) in order to obtain a honeycomb shape,
- heat-sealing said second (3) and first (2) layers forming said wrapping (1), said method being **characterised in that** it also comprises, after said step of at least partly overlapping said second (3) isothermal layer on said first (2) layer, the steps of:
- preparing a third (4) paper layer,
- at least partly overlapping said third (4) paper layer on said second (3) layer and **in that** said heat-sealing step also comprises the step of heat-sealing said third layer (4) with at least said second layer (3).

2. The method according to claim 1 characterised it that it further comprises a step of applying an adhesive (S) on at least a portion (P) of said first (2) paper layer.

3. The method according to the preceding claim, wherein a plurality of areas of said portion (P) comprising said adhesive (S) passes through a plurality (31') of empty portions of said second (3) layer for gluing on said third (4) layer.

4. The method according to any one of the preceding claims, **characterised in that** it further comprises a step of folding a first portion of said wrapping (1) onto a second portion of said wrapping (1), so that said first (2) layer defines the innermost layer of said wrapping (1), said folding step being prior to said heat-sealing step.

5. The method according to the preceding claim, wherein said heat-sealing step comprises a step of heat-sealing the perimeter edges of said wrapping (1) folded after said folding step.

6. The method according to any one of the preceding claims, **characterised in that** it further comprises a final cooling step of said heat-sealed wrapping (1) to stabilise the coupling of said layers.

7. The method according to any one of the preceding claims, **characterised in that** said heat-sealing step is carried out at a temperature between 150°C and 250°C.

8. The method according to claim 1, **characterised in that** it further comprises a step of applying said adhesive (S) at least on a portion (P') of said third (4) layer.

9. The method according to the preceding claim, **characterised in that** said step of overlapping said third (4) paper layer on said second (3) layer positions said at least one portion (P') of said third (4) layer in contact with said portion (P) of said first (2) layer and in contact with said second (3) layer.

10. An isothermal wrapping (1) comprising:
- a first (2) paper layer having a first face (2') and a second face (2") comprising an adhesive (S) arranged on at least one of its portions;
- a second (3) isothermal layer having a plurality of incisions (31), said second (3) layer being designed to be stably coupled to said portion of said second face (2") of said first (2) layer by means of said adhesive (S); said second (3) layer having a honey-comb arrangement and said first (2) and second (3) layers being made of paper;
- a third (4) paper layer, said third layer (4) being stably positioned in contact with said second (3) layer by means of a relative face 4', in such a way that said second (3) layer is interposed between said first (2) and said third (4) layer.

11. The wrapping (1) according to the preceding claim, wherein said first (2) layer is of the paper type designed to be in contact with food.

12. The wrapping (1) according to claim 10, wherein said third (4) layer has an area greater than the area of said first (2) and said second (3) layers.

13. The wrapping (1) according to the preceding claim, wherein said third (4) layer has a portion emerging relative to said first (2) and said second (3) layers in such a way as to allow a closing fold to be made of said third (4) layer on said first (2) layer.

14. The wrapping (1) according to the preceding claim, wherein said third (4) layer comprises a foldable portion (41) comprising a two-sided adhesive element and that said foldable portion (41) defines a portion protruding from said first (2) and said second (3) layers.
